# EUROPÄISCHE PATENTSCHRIFT

(11) **EP 0 732 861 B1**
(45) Veröffentlichungstag und Bekanntmachung des Hinweises auf die Patenterteilung: **12.06.2002**
(21) Anmeldenummer: 96103191.1
(22) Anmeldetag: 01.03.1996
(51) Int. Cl.: H04Q 7/24

(54) **Verfahren zur Übertragung von Teilnehmerdaten zwischen Netzknoten in mindestens einem die Struktur eines intelligenten Netzes unterstützenden Kommunikationsnetz**
Method for transferring subscriber data between network nodes in at least one of the structures of an intelligent network supporting the communication network
Procédé de communication de données d'abonnés entre des noeuds du réseau dans au moins une des structures du réseau intelligent supportant le réseau de communication

(30) Priorität: 13.03.1995 DE 19509000
(43) Veröffentlichungstag der Anmeldung: 18.09.1996
(73) Patentinhaber: SIEMENS AKTIENGESELLSCHAFT, 80333 München (DE)
(72) Erfinder: Becher, Reinhard, Dr.rer.nat., 81245 München (DE)

(56) Entgegenhaltungen:
- WO-A-95/26114
- DE-C- 4 415 734
- US-A- 5 345 502
- US-A- 5 353 331
- GABELGAARD B: "THE (GSM) HLR - ADVANTAGES AND CHALLENGES" INTERNATIONAL CONFERENCE ON UNIVERSAL PERSONAL COMMUNICATIONS, 27. September 1994, Seiten 335-339, XP000644800
- HIRSCHMAN C B: "SERVICE MOBILITY/TRANSPARENCY FOR PERSONAL COMMUNICATIONS" INTERNATIONAL CONFERENCE ON UNIVERSAL PERSONAL COMMUNICATIONS, 29. September 1992, Seiten 12.05.01-12.05.05, XP000672055

## Beschreibung

Die Erfindung betrifft ein Verfahren zur Übertragung von Teilnehmerdaten zwischen Netzknoten mindestens eines die Struktur eines intelligenten Netzes jeweils unterstützenden Kommunikationsnetzes gemäß dem Oberbegriff des Patentanspruchs 1.

Gemäß der für intelligente Netze geltenden CCITT-Empfehlung Q.1214 wird zur Nutzung eines gewünschten Dienstes ein Verzweigungsdatum (Trigger Detection Point) in eine Teilnehmerdatenbasis fest eingetragen. Bei Vorliegen des Verzweigungsdatums während eines Anrufs bzw. während des Verbindungsaufbaus für einen Anruf wird eine Signalisierungsverbindung zu einem gesonderten Netzknoten aufgebaut, der Informationen für die Anrufverarbeitung zur Verfügung stellt. Das mehrere Netzknoten umfassende Kommunikationsnetz kann beispielsweise ein drahtgebundenes Festnetz oder ein Mobilfunknetz, wie das nach dem GSM-Standard (Global System for Mobile Communication) arbeitende digitale, zellular aufgebaute Mobilfunksystem sein. Die Grundzüge des digitalen Mobilfunknetzes nach dem GSM-Standard sind beispielsweise aus der Systembeschreibung "D900-Mobile Communication System", von Huder/Geier, Siemens AG, 1992, Bestellnummer A30808-X3231-X-2-7618 bekannt.

Die US-PS-5,353,331 offenbart die Einbuchung eines Mobilfunkteilnehmers entweder über seine Heimstation (home base station) eines PCS- Netzes oder über eine Basisstation eines Mobilfunknetzes in Abhängigkeit von seinem Standort, wobei beide Netze eine gemeinsame AIN-Datenbank (AIN=Advanced Intelligent Network) für die Aufenthaltsbestimmung des Teilnehmers verwenden.

Aufgabe der vorliegenden Erfindung ist es, das Verfahren zur Übertragung von Teilnehmerdaten zwischen Netzknoten eines Kommunikationsnetzes der eingangs genannten Art unter Vermeidung der statischen und festen Speicherung der teilnehmerbezogenen Verzweigungsdaten flexibler zu gestalten.

Die am 28.9.1995 veröffentlichte WO 95/26114 beschreibt die interne Kommunikation zwischen Komponenten eines intelligenten Mobilfunknetzes, welches ein intelligentes Netz und ein Mobilfunknetz umfaßt. Insbesondere beschreibt die Schrift die Signalisierung innerhalb des intelligenten Mobilfunknetzes beim Ortswechsel eines Teilnehmers.

Ein Anwendungsbeispiel für eine intelligente Netzfunktion ist die Nutzung eines vom Teilnehmer gewünschten Dienstes. Dabei wird das Verzweigungsdatum als teilnehmerbezogenes Datum, das für den jeweiligen Netzteilnehmer, der den Dienst nutzen will, vorgesehen ist, in eine Teilnehmerdatenbasis fest eingetragen, um bei Erreichen des Ereignisses während des Anrufs bzw. während des Verbindungsaufbaus für den Anruf die Signalisierungsverbindung zum gesonderten Netzknoten, der die zur Ausführung des Dienstes erforderlichen Funktionen und Informationen zur Verfügung stellt, aufbauen zu können. Durch die statische Speicherung des Verzweigungsdatums im Netzknoten des Kommunikationsnetzes können die intelligenten Netzfunktionen einem mobilen Netzteilnehmer, der z.B. in ein anderes Kommunikationsnetz sich begibt, oder einem Netzteilnehmer, der sich in einen anderen Netzknoten bzw. ein anderes Netz eingebucht hat, nicht mehr zur Verfügung gestellt werden.

Diese Aufgabe wird gemäß der Erfindung durch die Merkmale des Patentanspruchs 1 gelöst. Weiterbildungen der Erfindung sind in den Unteransprüchen angegeben.

Durch die automatische Übertragung der für den Netzteilnehmer jeweils gespeicherten teilnehmerbezogenen Verzweigungsdaten von dem zentralen Netzknoten zu einem Zielnetzknoten bei jedem Übertritt des Netzteilnehmers in ein neues Aufenthaltsgebiet kann auf Grund der Verzweigungsdaten die Signalisierungsverbindung zum gesonderten Netzknoten auch im neuen Aufenthaltsgebiet dynamisch aufgebaut werden. Auf diese Weise stehen dem in einem oder mehreren Kommunikationsnetzen sich beliebig bewegenden Netzteilnehmer neben den individuellen Teilnehmerdaten, die Dienstedaten zur Nutzung von bestimmten Diensten umfassen können, auch sämtliche teilnehmerbezogenen Verzweigungsdaten zu jeder Zeit und an jedem Aufenthaltsort zur Verfügung.

Von Vorteil ist dies insbesondere, wenn der Teilnehmer jedesmal, wenn er von einem ersten Kommunikationsnetz mit dem Ursprungsnetzknoten in ein zweites Kommunikationsnetz mit dem Zielnetzknoten übertritt, dort unmittelbar und automatisch seine Verzweigungsdaten erhält.

Von Vorteil ist es, wenn das erfindungsgemäße Verfahren in einem digitalen Mobilfunknetz mit Mobilfunkteilnehmern zwischen als Ursprungsnetzknoten und Zielnetzknoten verwendeten Besucherregistern und einem zentralen Heimatregister angewendet wird, wobei Ursprungsnetzknoten und Zielnetzknoten in ein- und demselben Mobilfunknetz oder in verschiedenen Mobilfunknetzen angeordnet sein können.

Von Vorteil ist auch, wenn die für den Netzteilnehmer gespeicherten und automatisch bei jedem Übertritt des Teilnehmers in ein neues Aufenthaltsgebiet zur Verfügung gestellten Verzweigungsdaten mehrere Informationen zur Unterscheidung der Art des Anrufs, über die Adresse des gesonderten Netzknotens und Steuerinformationen enthalten.

Ein Ausführungsbeispiel der Erfindung wird anhand von Figuren erläutert. Im einzelnen zeigen
- Figur 1: die von der Übertragung der Teilnehmerdaten betroffenen Netzknoten in zwei verschiedenen Mobilfunknetzen und
- Figur 2: die in den Verzweigungsdaten enthaltenen Informationen, die zum Zielnetzknoten übertragen werden.

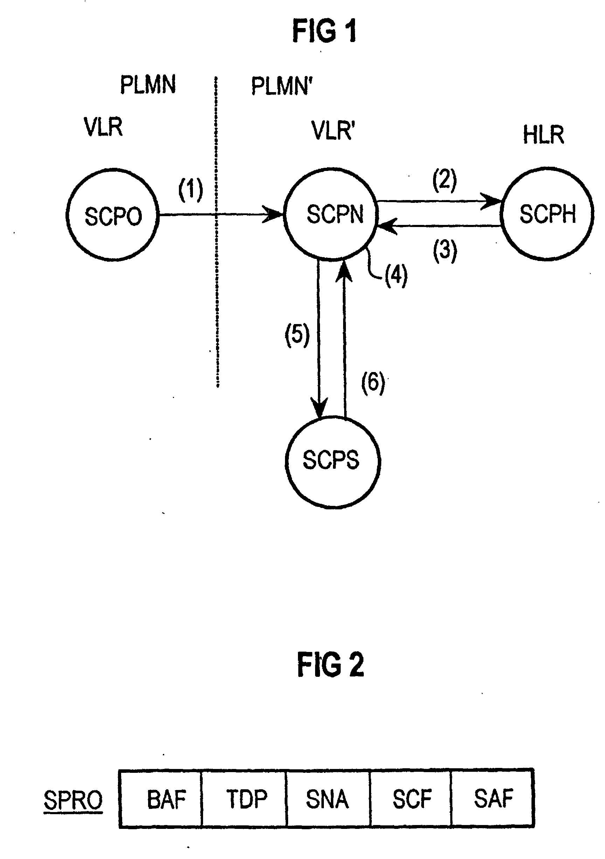

Figur 1 zeigt einen Ursprungsnetzknoten SCPO in einem digitalen, zellular aufgebauten Mobilfunknetz PLMN und einen Zielnetzknoten SCPN, einen zentralen Netzknoten SCPH und einen gesonderten Netzknoten SCPS in einem digitalen, zellular aufgebauten Mobilfunknetz PLMN'. Die nach dem GSM-Standard betriebenen Mobilfunknetze PLMN, PLMN' unterstützen die Netzarchitektur von intelligenten Netzen unter anderem dadurch, daß der Ursprungsnetzknoten SCPO als Besucherregister VLR, der Zielnetzknoten SCPN als Besucherregister VLR' und der zentrale Netzknoten SCPH als Heimatregister HLR betrachtet werden kann. Die Netzknoten von intelligenten Netzen stellen dabei Dienstesteuerungseinheiten (Service Control Points) dar. Im Mobilfunknetz PLMN ist ebenfalls mindestens ein Heimatregister angeordnet, das jedoch nicht dargestellt ist, da es für die Erfindung ohne Bedeutung ist.

Die Besucherregiser VLR, VLR' und das Heimatregister HLR dienen dabei zur Speicherung von Teilnehmerdaten der in den Mobilfunknetzen PLMN, PLMN' sich bewegenden Mobilfunkteilnehmer, wobei das Heimatregister HLR als zentrale Teilnehmerdatenbasis eines Mobilfunknetzes für alle Mobilfunkteilnehmern die individuell zugeordneten Teilnehmerdaten speichert, während in den Besucherregistern VLR, VLR' die Teilnehmerdaten nur vorübergehend hinterlegt sind, die zu den aktuell in einem bestimmten lokalen Aufenthaltsgebiet befindlichen und von einer dem Besucherregister jeweils fest zugeordneten Mobilvermittlungsstelle betreuten Mobilfunkteilnehmern gehören.

Das für Mobilfunknetze mit der Netzarchitektur intelligenter Netze dargestellte Beispiel kann ebenso auf Festnetze mit einer entsprechenden Struktur angewendet werden, bei denen die Vermittlungseinrichtungen Datenregister zur Speicherung der teilnehmerbezogenen Daten und der Dienstedaten aufweisen. Ebenso läßt sich die Erfindung zur Übertragung der Teilnehmerdaten zwischen einem drahtgebundenen Festnetz und einem drahtlosen Mobilfunknetz anwenden, sofern jedes Kommunikationsnetz die Struktur eines intelligenten Netzes unterstützt.

Für den Fall, daß der im Ursprungsnetzknoten SCPO aktuell registrierte Mobilfunkteilnehmer von einem ersten Aufenthaltsgebiet - im vorliegenden Fall von dem Mobilfunknetz PLMN - in ein zweites Aufenthaltsgebiet - im vorliegenden Fall in das Mobilfunknetz PLMN' - übertritt, findet ein Einbuchen des Mobilfunkteilnehmers im Zielnetzknoten SCPN statt (1). Ebenso kann eine Aktualisierung des momentanen Aufenthaltsorts des sich bewegenden Mobilfunkteilnehmers bei Übertritt von einem ersten Zuständigkeitsbereich, betreut von einer ersten Mobilvermittlungsstelle mit zugehörigem Besucherregister, in einen zweiten Zuständigkeitsbereich, betreut von einer zweiten Mobilvermittlungsstelle mit zugehörigem Besucherregister, in einem einzigen Mobilfunknetz durchgeführt werden. Das Einbuchen ist für GSM-Mobilfunknetze unter dem Begriff Aufenthaltsregistrierung (Location Update) bekannt und in der eingangs genannten Systembeschreibung "D900...." im Kapitel 8.1 auf den Seiten 61ff beschrieben.

Gemäß der Erfindung wird während des Einbuchens (1) des Mobilfunkteilnehmers im Zielnetzknoten SCPN von dem zentralen Netzknoten SCPH ein für die Mobilfunkteilnehmer festgelegtes Profil, das teilnehmerbezogene Dienstedaten (Service Profile) und teilnehmerbezogene Verzweigungsdaten (Trigger Profile) enthält, abgefragt (2). Von dem zentralen Netzknoten SCPH werden die teilnehmerbezogenen Verzweigungsdaten zusammen mit den teilnehmerbezogenen Dienstedaten zum anfordernden Zielnetzknoten SCPN übertragen (3), der die ankommenden Verzweigungsdaten dahingehend überprüft, ob Informationen zum Aufbau einer Signalisierungsverbindung zum gesonderten Netzknoten SCPS vorliegen oder nicht (4). Für diesen Fall enthalten die Verzweigungsdaten eine oder mehrere Verzweigungsinformationen - sogenannte "Trigger Detection Points" - bei deren Erreichen im Verbindungsaufbau eine Signalisierungsverbindung zum gesonderten Netzknoten SCPS hergestellt wird (5), um Informationen für die weitere Anrufbehandlung zum Zielnetzknoten SCPN zurück zu übertragen (6).

Auf diese Weise ist es möglich, den Mobilfunkteilnehmern ihre individuellen teilnehmerbezogenen Verzweigungsdaten unabhängig von deren Aufenthaltsort beim Einbuchen in ein neues Aufenthaltsgebiet jederzeit automatisch nachzuführen, so daß zu jedem Zeitpunkt und an jedem Aufenthaltsort des Mobilfunkteilnehmers in seinem oder in einem anderen Mobilfunknetz eine Signalisierungsverbindung vom Zielnetzknoten zum gesonderten Netzknoten aufgebaut werden kann. Dadurch läßt sich beispielsweise der in einem Ursprungsmobilfunknetz für einen Mobilfunkteilnehmer eingerichtete Diensteumfang bei dessen Übertritt in ein Zielmobilfunkgebiet dort ebenso nutzen, wenn die zu dem gesonderten Netzknoten aufzubauende Signalisierungsverbindung, erkennbar an den abgerufenen Verzweigungsdaten für den übergetretenen Netzteilnehmer, existent ist.

Figur 2 zeigt die Verzweigungsdaten SPRO, die zwischen dem Zielnetzknoten und dem Ursprungsnetzknoten übertragen werden, um die Signalisierungsverbindung zu dem gesonderten Netzknoten aufzubauen. Zu diesem Zweck bestehen die Verzweigungsdaten aus Basisinformationen BAF, durch die zwischen Verzweigungsdaten für abgehende Anrufe (Mobile Originated Calls) und ankommende Anrufe (Mobile Terminated Calls) und für Kurznachrichten (Short Message Service) unterschieden wird. Verzweigungsinformationen TDP (Trigger Detection Points) kennzeichnen das anrufbezogene Verzweigungsprofil in Abhängigkeit der für den Teilnehmer festgelegten und in Anspruch genommenen Dienste. Anhand einer Adresseninformation SNA, bestehend beispielsweise aus einer bestimmten Rufnummer, kann der gesonderte Netzknoten im Rahmen des Verbindungsaufbaus ausgewählt werden. Steuerinformationen SCF und SAF geben an, ob der vom Netzteilnehmer in Anspruch genommene Dienst nur durch den Netzbetreiber des Kommunikationsnetzes oder auch vom Teilnehmer selbst gesteuert werden kann, und ob dieser Dienst aktiviert ist oder nicht. Die Steuerinformation SAF steht nur dann zur Verfügung, wenn die Steuerinformation SCF auch von dem Netzteilnehmer in Anspruch genommen werden kann.

Beim Verbindungsaufbau für ankommende und abgehende Anrufe wird also bei Vorliegen der Verzweigungsdaten für den jeweiligen Teilnehmer eine Signalisierungsverbindung zum gesonderten Netzknoten aufgebaut, der die erforderlichen Informationen bereitstellt. Gegebenenfalls kann auch der gesonderte Netzknoten den Zielnetzknoten auffordern, eine Verbindung zum gesonderten Netzknoten herzustellen, insbesondere dann, wenn der Zielnetzknoten in einem anderen Kommunikationsnetz als der Ursprungsnetzknoten liegt. Denn auch für diesen Fall ist gewährleistet, daß die für den Mobilfunkteilnehmer im ursprünglichen Aufenthaltsgebiet möglichen und in Anspruch genommenen Dienste ebenso im neuen Aufenthaltsgebiet genutzt werden können. Einige der in den Verzweigungsdaten SPRO enthaltenen Verzweigungsinformationen TDP (Trigger Detection Points), sind beispielsweise in der eingangs genannten CCITT-Empfehlung Q.1214 angegeben. Die Übertragung der Teilnehmerdaten zwischen den einzelnen Netzknoten erfolgt anhand von Übertragungsprotokollen, die in Abhängigkeit vom Vorliegen eines drahtgebundenen Festnetzes oder eines drahtlosen Mobilfunknetzes und in Abhängigkeit davon, ob es sich um einen Übertritt in einem einzigen Mobilfunknetz bzw. Festnetz oder zwischen zwei verschiedenen Netzen handelt, **gewählt werden**.

## Patentansprüche

1. Verfahren zur Übertragung von Teilnehmerdaten zwischen Netzknoten (SCPN,SCPH,SCPS) mindestens eines die Netzstruktur eines intelligenten Netzes jeweils unterstützenden Kommunikationsnetzes (PLMN'), bei dem die in einem zentralen Netzknoten (SCPH) gespeicherten Teilnehmerdaten mindestens ein einem Netzteilnehmer zugeordnetes teilnehmerbezogenes Verzweigungsdatum (TDP) enthalten, durch das eine Signalisierungsverbindung zu einem gesonderten Netzknoten (SCPS) hergestellt wird, und bei dem von dem gesonderten Netzknoten (SCPS) Informationen bereitgestellt werden,
**dadurch gekennzeichnet,**
**daß** bei jedem Übertritt des Netzteilnehmers von einem ersten Aufenthaltsgebiet mit einem Ursprungsnetzknoten (SCPO) in ein zweites Aufenthaltsgebiet mit einem Zielnetzknoten (SCPN) für den Netzteilnehmer gespeicherte teilnehmerbezogene Verzweigungsdaten (SPRO) von dem zentralen Netzknoten (SCPH) automatisch angefordert und zum Zielnetzknoten (SCPN) übertragen werden.

2. Verfahren nach Anspruch 1,
**dadurch gekennzeichnet,**
**daß** das erste Aufenthaltsgebiet mit dem Ursprungsnetzknoten (SCPO) und das zweite Aufenthaltsgebiet mit dem Zielnetzknoten (SCPN) in einem Kommunikationsnetz liegen.

3. Verfahren nach Anspruch 1,
**dadurch gekennzeichnet,**
**daß** das erste Aufenthaltsgebiet mit dem Ursprungsnetzknoten (SCPO) und das zweite Aufenthaltsgebiet mit dem Zielnetzknoten (SCPN) in verschiedenen Kommunikationsnetzen (PLMN, PLM-N') liegen.

4. Verfahren nach einem der Ansprüche 1 bis 3,
**dadurch gekennzeichnet,**
**daß** das Kommunikationsnetz ein drahtgebundenes Festnetz ist.

5. Verfahren nach einem der Ansprüche 1 bis 3,
**dadurch gekennzeichnet,**
**daß** das Kommunikationsnetz ein Mobilfunknetz ist.

6. Verfahren nach Anspruch 5,
**dadurch gekennzeichnet,**
**daß** der Ursprungsnetzknoten (SCPO) und der Zielnetzknoten (SCPN) jeweils ein Besucherregister (VLR,VLR') und der zentrale Netzknoten (SCPH) ein Heimatregister des Mobilfunknetzes bildet.

7. Verfahren nach einem der vorhergehenden Ansprüche,
**dadurch gekennzeichnet,**
**daß** die Verzweigungsdaten (SPRO) Basisinformationen (BAF), durch die zwischen abgehenden Anrufen und ankommenden Anrufen unterschieden wird, Verzweigungsinformationen (TDP) und mindestens eine Adresseninformation (SNA) zur Auswahl des gesonderten Netzknotens (SCPS) enthalten.

8. Verfahren nach Anspruch 7,
**dadurch gekennzeichnet,**
**daß** die Verzweigungsdaten (SPRO) zusätzlich Steuerinformationen (SCF,SAF) enthalten, die angeben, ob die Verzweigungsinformationen (TDP) von dem Netzteilnehmer selbst oder von dem Netzbetreiber des Kommunikationsnetzes gesteuert werden bzw. ob die Verzweigungsinformationen (TDP) aktiviert sind.

## Claims

1. Method for transmitting subscriber data between network nodes (SCPN, SCPH, SCPS) in at least one communications network (PLMN') which in each case supports the network structure of an intelligent network, in which the subscriber data stored in a central network node (SCPH) contains at least one subscriber-related branching data item (TDP) associated with one network subscriber, by means of which a signalling connection is set up to a separate network node (SCPS), and in which information is provided by the separate network node (SCPS),
**characterized**
**in that**, whenever the network subscriber passes from a first location region with a source network node (SCPO) to a second location region with a destination network node (SCPN), subscriber-related branching data (SPRO), which is stored for that network subscriber, is automatically requested by the central network node (SCPH), and is transmitted to the destination network node (SCPN).

2. Method according to Claim 1,
**characterized**
**in that** the first location region with the source network node (SCPO), and the second location region with the destination network node (SCPN), are located in one communications network.

3. Method according to Claim 1,
**characterized**
**in that** the first location region with the source network node (SCPO), and the second location region with the destination network node (SCPN), are located in different communications networks (PLMN, PLMN').

4. Method according to one of Claims 1 to 3,
**characterized**
**in that** the communications network is a wire-connected landline network.

5. Method according to one of Claims 1 to 3,
**characterized**
**in that** the communications network is a mobile radio network.

6. Method according to Claim 5,
**characterized**
**in that** the source network node (SCPO) and the destination network node (SCPN) each form a visitor location register (VLR, VLR'), and the central network node (SCPH) forms a home location register for the mobile radio network.

7. Method according to one of the preceding claims,
**characterized**
**in that** the branching data (SPRO) contains basic information (BAF), by means of which a distinction is drawn between outgoing calls and incoming calls, branching information (TDP) and at least one address information item (SNA) for selecting the separate network node (SCPS).

8. Method according to Claim 7,
**characterized**
**in that** the branching data (SPRO) additionally contains control information (SCF, SAF), which indicates whether the branching information (TDP) is controlled by the network subscriber himself or by the network operator of the communications network, and whether the branching information (TDP) is activated.

## Revendications

1. Procédé destiné à la transmission de données d'abonnés entre des noeuds de réseau (SCPN, SCPH, SCPS) d'au moins un réseau de communication (PLMN') supportant dans chaque cas la structure de réseau d'un réseau intelligent, dans lequel les données d'abonnés mémorisées dans un noeud central de réseau (SCPH) comportent au moins une donnée de branchement (TDP), propre aux abonnés et affectée à un abonné du réseau, grâce à laquelle une liaison de signalisation est établie vers un noeud spécial de réseau (SCPS) et dans lequel le noeud spécial de réseau (SCPS) met des informations à disposition
**caractérisé par le fait**
**que**, lors de chaque passage de l'abonné du réseau d'une première zone de séjour, ayant un noeud de réseau d'origine (SCPO), vers une deuxième zone de séjour, ayant un noeud de réseau de destination (SCPN), pour l'abonné du réseau, des données de branchement (SPRO), mémorisées et propres à l'abonné, sont automatiquement demandées par le noeud central de réseau (SCPH) et transmises au noeud de réseau de destination (SCPN).

2. Procédé selon la revendication 1
**caractérisé par le fait**
**que** la première zone de séjour, ayant un noeud de réseau d'origine (SCPO), et la deuxième zone de séjour, ayant un noeud de réseau de destination (SCPN), se trouvent dans un réseau de communication.

3. Procédé selon la revendication 1
**caractérisé par le fait**
**que** la première zone de séjour, ayant un noeud de réseau d'origine (SCPO), et la deuxième zone de séjour, ayant un noeud de réseau de destination (SCPN), se trouvent dans des réseaux de communication (PLMN, PLMN') différents.

4. Procédé selon l'une des revendications 1 à 3
**caractérisé par le fait**
**que** le réseau de communication est un réseau fixe câblé.

5. Procédé selon l'une des revendications 1 à 3
**caractérisé par le fait**
**que** le réseau de communication est un réseau de radio mobile.

6. Procédé selon la revendication 5
**caractérisé par le fait**
**que** le noeud de réseau d'origine (SCPO) et le noeud de réseau de destination (SCPN) constituent chacun un registre de visiteurs (VLR, VLR') et le noeud central de réseau (SCPH), un registre d'origine du réseau de radio mobile.

7. Procédé selon l'une des revendications précédentes
**caractérisé par le fait**
**que** les données de branchement (SPRO) renferment des informations de base (BAF), grâce auxquelles il est possible de faire une distinction entre appels sortants et appels entrants, des informations de branchement (TDP) et au moins une information d'adresse (SNA) destinée à la sélection du noeud spécial de réseau (SCPS).

8. Procédé selon la revendication 7
**caractérisé par le fait**
**que** les données de branchement (SPRO) renferment, en complément, des informations de commande (SCF, SAF) qui indiquent si les informations de branchement (TDP) sont commandées par l'abonné du réseau lui-même ou par l'opérateur du réseau de communication et si les informations de branchement (TDP) sont activées.
